# EUROPÄISCHE PATENTANMELDUNG

(11) **EP 4 461 113 A1**
(43) Veröffentlichungstag der Anmeldung: **13.11.2024**
(21) Anmeldenummer: 24401014.6
(22) Anmeldetag: 29.04.2024
(51) Int. Cl.: A01C 7/20, A01C 5/06

(54) **LANDWIRTSCHAFTLICHE ARBEITSMASCHINE**

(30) Priorität: 09.05.2023 DE 102023112064
(71) Anmelder: Amazonen-Werke H. Dreyer SE & Co. KG, 49205 Hasbergen (DE)
(72) Erfinder: Johannaber, Stefan Jan, 49205 Hasbergen (DE); Wiebusch, Thorsten, 49205 Hasbergen (DE); Breuer, Jan Henrik, 49205 Hasbergen (DE); Bührke, Johannes, 49205 Hasbergen (DE)

(57) **Zusammenfassung**

Die Erfindung betrifft eine landwirtschaftliche Arbeitsmaschine, mit mehreren parallel zueinander angeordneten, entlang einer landwirtschaftlichen Nutzfläche (N) bewegbaren Schareinheiten (2), die jeweils mindestens ein Schar (3) zum Eingriff in die Nutzfläche (N) und eine Tiefenführungsrolle (4) zur Einstellung der Arbeitstiefe (T) des Schars (3) aufweisen, wobei die Schareinheiten (2) zum Ausgleich von Bodenunebenheiten der Nutzfläche (N) über eine Parallelogramm-Aufhängung (5) mit einem Maschinenrahmen (6) verbunden sind und wobei die Tiefenführungsrolle (4) gegenüber der Parallelogramm-Aufhängung (5) bewegbar angeordnet ist.

## Beschreibung

Die Erfindung betrifft eine landwirtschaftliche Arbeitsmaschine mit mehreren parallel zueinander angeordneten, entlang einer landwirtschaftlichen Nutzfläche bewegbaren Schareinheiten, die jeweils mindestens ein Schar zum Eingriff in die Nutzfläche und eine Tiefenführungsrolle zur Einstellung der Arbeitstiefe des Schars aufweisen, wobei die Schareinheiten zum Ausgleich von Bodenunebenheiten der Nutzfläche über eine Parallelogramm-Aufhängung mit einem Maschinenrahmen verbunden sind.

In der landwirtschaftlichen Praxis werden verschiedenste landwirtschaftliche Arbeitsmaschinen eingesetzt. So kommen im Bereich des Pflanzenbaus beispielsweise Arbeitsmaschinen zum Einsatz, mit denen die Böden landwirtschaftlicher Nutzflächen, also etwa Acker und Felder, bearbeitet werden können. Ferner zählen Sä- oder Drillmaschinen dazu, mit welchen Saatgut auf landwirtschaftlichen Nutzflächen ausgebracht werden kann. Solche Arbeitsmaschinen weisen in der Regel mehrere Schareinheiten auf, welche jeweils ein oder mehrere Schare zum Eingriff in den Boden der jeweiligen Nutzfläche umfassen. Wenn solche Arbeitsmaschinen entlang der landwirtschaftlichen Nutzfläche bewegt werden, wird über die in den Boden eingreifenden Schare eine Wendung, Lockerung oder Verfeinerung des Bodens erreicht. Bei Sä- oder Drillmaschinen kann über den Bodeneingriff der Schare eine rinnen- oder rillenartige Säfurche in der Nutzfläche erzeugt werden, in welche das entsprechende Saatgut abgelegt werden kann.

Zur Bewegung solcher Arbeitsmaschinen in Bewegungsrichtung entlang der jeweiligen Nutzfläche kommen oftmals landwirtschaftliche Zugmaschinen wie Traktoren oder Schlepper zum Einsatz, an welche die Arbeitsmaschinen angehängt oder angekuppelt sein können. Alternativ können die Arbeitsmaschinen als selbstfahrende Arbeitsmaschinen, insbesondere auch als autonom selbstfahrende Arbeitsmaschinen, ausgebildet sein.

In der Regel sind bei solchen Arbeitsmaschinen mehrere Schareinheiten an einem gemeinsamen Maschinenrahmen angelenkt welche sich von diesem oftmals balken- oder armartig erstrecken. Die Schareinheiten weisen zudem in der Regel mindestens eine über die Nutzfläche laufende Tiefenführungsrolle auf, über welche die Arbeitstiefe der Schare eingestellt werden kann. Als Arbeitstiefe wird derjenige Abstand zur Oberfläche der Nutzfläche bezeichnet, in welchem das Schar bei der Bodenbearbeitung in den Boden der Nutzfläche eingreift. Je nach Umgebungsbedingungen und/oder Zweck der Bodenbearbeitung können über die Veränderung der Höhendifferenz zwischen Tiefenführungsrolle und Schar unterschiedliche Arbeitstiefen eingestellt werden. Bei Sämaschinen lassen sich auf diese Weise beispielsweise unterschiedliche Ablagetiefen für das Saatgut einstellen.

In diesem Zusammenhang wird etwa in der DE 10 2008 045 132 A1 eine Arbeitsmaschine beschrieben, bei welcher die Tiefenführungsrollen der einzelnen Schareinheiten zur Einstellung der Arbeitstiefe jeweils manuell höhenverstellbar sind. Diese händische, schareinheitenspezifische Einstellung hat sich in der landwirtschaftlichen Praxis jedoch als vergleichsweise aufwendig und zeitintensiv herausgestellt. Ferner können bei der manuellen Einstellung der Arbeitstiefe auch Einstellfehler durch das Bedienpersonal auftreten.

Reale landwirtschaftliche Nutzflächen sind naturgemäß in aller Regel nicht durchgängig flach oder eben, sondern weisen eine gewisse Welligkeit oder Unebenheit auf. Bei der Bodenbearbeitung solcher Nutzflächen mit landwirtschaftlichen Arbeitsmaschinen können sich aufgrund der Unebenheit variierende Arbeitstiefen einstellen, wodurch die Bodenbearbeitung oder auch die Aussaat gestört werden kann.

Vor diesem Hintergrund ist es bei qualitativ hochwertigen Arbeitsmaschinen bekannt, die einzelnen Schareinheiten nicht über einen einfachen Träger oder Arm an dem Maschinenrahmen zu befestigen, sondern über eine Parallelogramm-Aufhängung. Eine Parallelogramm-Aufhängung ermöglicht den Ausgleich von Bodenunebenheiten und insbesondere eine präzise Führung der Schareinheiten, so dass die Arbeitstiefe auch bei welligen Nutzflächen im Wesentlichen konstant bleibt.

Zur Einstellung der Arbeitstiefe ist es bei Arbeitsmaschinen mit Parallelogramm-Aufhängung beispielsweise aus der DE 10 2019 124 220 A1 oder der EP 2 982 231 B1 bekannt, die Parallelogramm-Aufhängungen sämtlicher Schareinheiten über eine zentrale Arbeitstiefeneinstellung zu verkippen. Hierdurch lässt sich die Arbeitstiefe der Schare auf zeitsparende Art und Weise für alle Schareinheiten gleichzeitig einstellen.

Allerdings hat es sich bei solchen Systemen als nachteilig erwiesen, dass mit einer Veränderung der Arbeitstiefe in der Regel auch eine Veränderung des Anstellwinkels der Schare relativ zur Nutzfläche, d. h. der Winkellage der Schare im Raum einhergeht. Ein veränderter Anstellwinkel (so genannter "Angle of Attack") der Schare ist jedoch in aller Regel unerwünscht, da hieraus oftmals veränderte Bedingungen der Bodenbearbeitung oder auch andere Kraftverhältnisse resultieren können, welche insbesondere bei Sämaschinen zur Verhinderung von damit einhergehenden Aussaatfehlern vermieden werden sollten.

Vor diesem Hintergrund stellt sich die Erfindung die **Aufgabe**, eine Arbeitsmaschine, bei welcher die Schareinheiten über eine Parallelogramm-Aufhängung mit dem Maschinenrahmen verbunden sind, anzugeben, bei welcher sich die Arbeitstiefe der Schare auf zeitsparende Art und Weise einstellen lässt, ohne dass hiermit eine unerwünschte Veränderung der Anstellwinkel der Schare verbunden ist.

Bei einer landwirtschaftlichen Arbeitsmaschine der vorstehend genannten Art wird diese Aufgabe durch die Merkmale des Patentanspruchs 1 **ge** - **löst**. Vorteilhafte Weiterbildungen sind in den abhängigen Unteransprüchen angegeben.

Die Tiefenführungsrolle ist gegenüber der Parallelogramm-Aufhängung bewegbar angeordnet. Eine solche Ausgestaltung ermöglicht eine präzise Einstellung der Arbeitstiefe, ohne dass damit eine unerwünschte Veränderung des Anstellwinkels der Schare einhergeht. Eine solche Ausgestaltung erweist sich insbesondere dann als vorteilhaft, wenn mehr als ein Schar über ein und dieselbe Parallelogramm-Aufhängung aufgehängt sind, da in diesem Fall ein Verkippungsausgleich entfallen kann. Im Rahmen der Erfindung ist ferner denkbar, dass jeweils zumindest zwei Tiefenführungsrollen vorgesehen sind, um eine größere Aufstandsfläche zu erreichen.

Es hat sich in diesem Zusammenhang ferner als vorteilhaft herausgestellt, wenn die Tiefenführungsrolle gegenüber der Parallelogramm-Aufhängung schwenkbar angeordnet ist. Eine solche Anordnung erlaubt eine einfache und zuverlässige Einstellung der Arbeitstiefe durch Verschwenken der Tiefenführungsrolle gegenüber der Parallelogramm-Aufhängung. Es ergibt sich ein kinematisch und konstruktiv einfacher, auf bedienerfreundliche Art und Weise steuerbarer Aufbau.

In diesem Zusammenhang ist es bevorzugt, wenn die Tiefenführungsrolle an einem Schwenkhebel angeordnet ist, welcher um einen an der Parallelogramm-Aufhängung angeordneten Drehpunkt drehbar gelagert ist. Bei einer solchen Anordnung lässt sich eine Bewegbarkeit der Tiefenführungsrolle relativ zu der Parallelogramm-Aufhängung besonders einfach und störungsunanfällig sicherstellen. Insbesondere kann der Schwenkhebel nach Art einer Schwinge in einem gewissen Winkelbereich um den Drehpunkt drehbar gelagert sein. Der Winkelbereich kann bezogen auf eine Normalstellung des Schwenkhebels ± 90 Grad, bevorzugt ± 60 Grad, besonders bevorzugt kleiner als ± 45 Grad betragen.

Es wird ferner vorgeschlagen, dass die Tiefenführungsrolle über eine Arbeitstiefeneinstellung bewegbar angeordnet ist. Eine solche Ausgestaltung erlaubt eine gleichermaßen bedienerfreundliche wie präzise Einstellung der Arbeitstiefe über die Arbeitstiefeneinstellung. Insbesondere lässt sich die Arbeitstiefe bei einer solchen Anordnung auf einfache Art und Weise mit hoher Wiederholgenauigkeit einstellen.

Eine vorteilhafte Weiterbildung der Erfindung sieht in diesem Zusammenhang vor, dass die Tiefenführungsrolle an einem ersten Ende des Schwenkhebels angeordnet ist und dass dessen zweites Ende mit der Arbeitstiefeneinstellung gekoppelt ist. Es resultiert ein kinematisch einfacher, wartungsarmer Aufbau. Ein solcher Aufbau kann insbesondere auch unter den oftmals widrigen Umgebungsbedingungen, wie sie bei der Bodenbearbeitung und/oder der Aussaat auf landwirtschaftlichen Nutzflächen vorherrschen können, eine zuverlässige Einstellung der Arbeitstiefe ermöglichen.

Zudem hat es sich als konstruktiv vorteilhaft herausgestellt, wenn sich der Schwenkhebel abgewinkelt zwischen dem ersten Ende und dem zweiten Ende erstreckt. Über die Form des Schwenkhebels, insbesondere über die Gestaltung der Abwinklung, lässt sich der Bewegungsspielraum der Tiefenführungsrolle an die jeweiligen Anforderungen und/oder den zur Verfügung stehenden Bauraum der Arbeitsmaschine anpassen. Der Schwenkhebel kann einfach oder mehrfach abgewinkelt sein, etwa auch in unterschiedliche Raumrichtungen. Es sind jedoch auch Ausgestaltungen mit nicht abgewinkelten, beispielsweise geraden oder gekrümmten Schwenkhebeln denkbar. Der Schwenkhebel kann einteilig oder mehrteilig ausgebildet sein.

Aus konstruktiver Sicht ist es in diesem Zusammenhang bevorzugt, wenn der Drehpunkt zwischen dem ersten Ende und dem zweiten Ende des Schwenkhebels angeordnet ist, wobei der Schwenkhebel wippenartig um den Drehpunkt bewegbar ist. Eine solche Anordnung erlaubt eine einfache und störungsunanfällige Einstellung der Arbeitstiefe über eine wippen- oder schaukelartige Bewegung des Schwenkhebels. Insbesondere kann es in diesem Zusammenhang von Vorteil sein, wenn der Schwenkhebel nach Art eines zweiseitigen, um den Drehpunkt drehbar angeordneten Hebels ausgebildet ist. Zudem hat es sich als günstig erwiesen, wenn der Drehpunkt in horizontaler Richtung näher an dem zweiten Ende als an dem ersten Ende angeordnet ist, wobei auch andere Anordnungen des Drehpunktes vorteilhaft sein können. Von Vorteil ist es ferner, wenn die Tiefenführungsrolle zur Einstellung der Arbeitstiefe auf einer Umlaufbahn um den Drehpunkt bewegbar angeordnet ist.

Es wird ferner vorgeschlagen, dass die Parallelogramm-Aufhängung zwei in jeweils einem rahmenseitigen Gelenkpunkt schwenkbar an dem Maschinenrahmen angelenkte, parallel zueinander angeordnete Lenker und einen sich scharseitig zwischen den Lenkern erstreckenden, in zwei scharseitigen Gelenkpunkten mit diesen verbundenen Arm aufweist. Eine solche Ausgestaltung der Parallelogramm-Aufhängung erlaubt einen zuverlässigen Ausgleich von Bodenunebenheiten der Nutzfläche, wobei der Arm über die Lenker parallelgeführt werden kann. Insbesondere können die beiden Lenker sich im Wesentlichen in Richtung einer Bewegungsrichtung erstrecken, wodurch ein einfacher Ausgleich von quer zu der Bewegungsrichtung verlaufenden Bodenwellen und/oder Unebenheiten ermöglicht werden kann. Ferner kann es von Vorteil sein, wenn sich die Lenker im Wesentlichen parallel oder schräg abgewinkelt zur Nutzfläche erstrecken. Einer der Lenker kann dabei als Oberlenker und der andere Lenker als Unterlenker ausgebildet sein, wobei der Oberlenker parallel zu dem Unterlenker in vertikaler Richtung beabstandet zu diesem angeordnet sein kann. Der Arm kann sich im Wesentlichen vertikal erstrecken. Im Hinblick auf eine Einstellbarkeit der Parallelogramm-Aufhängung kann es zudem von Vorteil sein, wenn die rahmenseitige Gelenkpunkte gegenüber dem Maschinenrahmen bewegbar ausgebildet sind.

Des Weiteren hat es sich als kinematisch vorteilhaft herausgestellt, wenn der Arm mit einem Koppelelement verbunden ist, welches zum Ausgleich von Bodenunebenheiten der Nutzfläche über die Parallelogramm-Aufhängung in vertikaler Richtung gegenüber dem Maschinenrahmen parallelgeführt ist. Das Koppelelement kann insbesondere zur Parallelführung des Schars und/oder der Tiefenführungsrolle relativ zum Maschinenrahmen ausgebildet sein, wofür das Koppelelement mit dem Schar und/oder der Tiefenführungsrolle gekoppelt sein kann.

Eine weitere vorteilhafte Ausgestaltung sieht vor, dass das Koppelelement eine Scharanbindung zur Anbindung der Schars und den Drehpunkt zur Lagerung des Schwenkhebels aufweist. Eine solche Ausgestaltung hat sich als vorteilhaft im Hinblick auf einen kinematisch einfachen Ausgleich von Bodenunebenheiten der Nutzfläche herausgestellt. Als konstruktiv vorteilhaft hat sich in diesem Zusammenhang ein einstückiger Aufbau des Koppelelements erwiesen. Je nach Anwendungsfall kann sich jedoch auch ein mehrstückiger Aufbau des Koppelelements, insbesondere ein Aufbau mit separater Scharanbindung und/oder separatem Drehpunkt, als vorteilhaft herausstellen.

Es kann ferner von Vorteil sein, wenn die Arbeitstiefeneinstellung ein Stellelement zum Aufbringen eines Stellweges auf die Tiefenführungsrolle aufweist. Ein Stellelement ermöglicht auf bedienerfreundliche Art und Weise die Aufbringung einer Stellkraft auf die Tiefenführungsrolle um den Stellweg zur Einstellung der Arbeitstiefe hervorzurufen. Es ergibt sich eine Fernbedienbarkeit, beispielsweise von der landwirtschaftlichen Zugmaschine. Ferner erlaubt ein Stellelement eine wiederholgenaues Anfahren eines Stellweges, insbesondere Aufbringen der Stellkraft, wobei sowohl eine Erhöhung als auch eine Reduzierung der Arbeitstiefe über das Stellelement ermöglicht werden kann.

In Bezug auf die Arbeitstiefeneinstellung wird weiterhin vorgeschlagen, dass das Stellelement mit dem zweiten Ende des Schwenkhebels gekoppelt ist. Eine solche Anordnung ermöglicht eine einfache Bewegung des Schwenkhebels über das Stellelement zur Einstellung der Arbeitstiefe mit einer vergleichsweise geringen Betätigungskraft. Zudem kann sich eine solche Ausgestaltung im Hinblick auf möglichst geringe Stellwege als vorteilhaft erweisen. Von Vorteil ist in diesem Zusammenhang ferner eine dauerhafte, starre Verbindung des Stellelements mit dem zweiten Ende des Schwenkhebels. Alternativ kann das Stellelement auch an einer anderen Stelle mit dem Schwenkhebel gekoppelt sein.

Zudem hat es sich als bevorzugt herausgestellt, wenn das Stellelement über einen Aktor betätigbar ist. Ein Aktor erlaubt eine bedienerfreundliche, kraftarme Betätigung des Stellelements, insbesondere eine Fernbetätigung. Hierbei kann der Aktor beispielsweise als elektrisch, hydraulisch oder pneumatisch betriebener Aktor ausgeführt sein. Zudem lässt sich ein solcher Aktor auf steuerungstechnisch vorteilhafte Art und Weise in die Steuerung der Arbeitsmaschine und/oder der Zugmaschine integrieren.

In diesem Zusammenhang hat es sich als vorteilhaft erwiesen, wenn der Aktor als drehbare Steuerwelle ausgebildet ist. Eine solche Ausgestaltung hat sich als steuerungstechnisch vorteilhaft herausgestellt. Insbesondere hat sich eine drehbare Steuerwelle als vorteilhaft im Hinblick auf eine möglichst fein dosierbare Einstellung der Arbeitstiefe erwiesen. Zudem lassen sich über eine drehbare Steuerwelle mehrere Stellelemente auf einfache und zuverlässige Art und Weise gleichzeitig betätigen. Ferner lässt sich eine drehbare Steuerwelle vergleichsweise einfach in einem vorhandenen Bauraum der Arbeitsmaschine integrieren.

Des Weiteren hat es sich als konstruktiv vorteilhaft herausgestellt, wenn der Aktor zwischen den beiden rahmenseitigen Gelenkpunkten an dem Maschinenrahmen angeordnet ist. Eine solche Ausgestaltung kann sich insbesondere im Hinblick auf eine effiziente Bauraumausnutzung als vorteilhaft erweisen. Je nach konstruktiver Ausgestaltung der Arbeitsmaschine kann jedoch auch eine andere Positionierung des Aktors vorteilhaft sein.

In Bezug auf die Ausgestaltung des Stellelements hat es sich als vorteilhaft herausgestellt, wenn dieses als Zugelement, insbesondere als Kette oder Seil, ausgebildet ist. Über ein Zugelement lassen sich als Zugkräfte ausgebildete Stellkräfte auf einfache Art und Weise von dem Aktor auf den Schwenkhebel übertragen. Zudem erweist sich ein als Seil oder Kette ausgeführtes Zugelement in der Regel als verschleißarm und wartungsfreundlich. Ferner kann insbesondere ein biegeweiches Zugelement auf platzsparende Art und Weise angeordnet werden, beispielsweise indem sich das Zugelement an andere Bauteile oder Komponenten anschmiegt. Neben einer Ausführung als Seil oder Kette können auch Bänder, Gurte, Riemen oder ähnliche Zugelemente zum Einsatz kommen.

In diesem Zusammenhang wird ferner vorgeschlagen, dass das als Zugelement ausgebildete Stellelement über mindestens einen der Gelenkpunkte der Parallelogramm-Aufhängung geführt ist. Es resultiert ein platzsparender Aufbau, bei welchem das Zugelement insbesondere gekrümmt über den mindestens einen Gelenkpunkt geführt werden kann.

In einer konstruktiv vorteilhaften Weiterbildung ist das als Zugelement ausgebildete Stellelement über zwei Gelenkpunkte der Parallelogramm-Aufhängung geführt. Bei einer solchen Ausführung erweist sich das Zugelement als besonders leicht zugänglich, wodurch sich die Montagefreundlichkeit der Konstruktion verbessern lässt. Ferner kann das Zugelement bei einer solchen Anordnung den Bewegungen der Parallelogramm-Aufhängung auf einfache Art und Weise folgen, wodurch die Ausfallsicherheit der Arbeitstiefeneinstellung erhöht werden kann.

In diesem Zusammenhang hat es sich ferner als konstruktiv vorteilhaft erwiesen, wenn das als Zugelement ausgebildete Stellelement über einen der Lenker der Parallelogramm-Aufhängung geführt ist. Eine solche Ausgestaltung ermöglicht dem Zugelement eine zuverlässige Führung. Ferner erweist sich das Zugelement in einer solchen Anordnung als besonders leicht zugänglich. Besonders vorteilhaft kann es in diesem Zusammenhang sein, wenn das Stellelement über den Oberlenker geführt ist.

Ferner wird vorgeschlagen, dass das als Zugelement ausgebildete Stellelement über den Arm der Parallelogramm-Aufhängung geführt ist. Es ergibt sich eine weitere Verbesserung der Zugänglichkeit des Zugelements sowie ein platzsparender Aufbau.

Eine weitere bevorzugte Weiterbildung der Erfindung sieht vor, dass das als Zugelement ausgebildete Stellelement in konstantem Abstand über den oder die Gelenkpunkte und/oder den Lenker und/oder den Arm geführt ist. Es ergeben sich konstante Hebelarme, welche sich im Hinblick auf eine kraftsparende sowie leicht steuerbare Einstellung der Arbeitstiefe als vorteilhaft erwiesen haben.

Zudem kann es steuerungstechnisch sowie konstruktiv vorteilhaft sein, wenn der Aktor mit dem als Zugelement ausgebildeten Stellelement eine Winde bildet. Der Aktor kann dabei insbesondere als trommelartige Steuerwelle ausgebildet sein, auf welche das Zugelement zumindest teilweise aufgewickelt sein kann. Durch eine Drehbewegung der Steuerwelle lässt sich das Zugelement auf- oder abwickeln, wodurch die Arbeitstiefe verändert werden kann.

Eine konstruktiv vorteilhafte Ausgestaltung sieht vor, dass das Stellelement als Druckelement ausgebildet ist. Eine solche Ausgestaltung erlaubt die Übertragung von Druckkräften zur Einstellung der Arbeitstiefe. Eine Ausgestaltung des Stellelements als Druckelement kann sich insbesondere bei rauen Umgebungsbedingungen als zuverlässig und vergleichsweise störungsunanfällig herausstellen. Insbesondere kann das Stellelement als Zug-/Druckelement zur Übertragung von Zug- und Druckkräften ausgebildet sein.

In diesem Zusammenhang ist es ferner bevorzugt, wenn das als Druckelement ausgebildete Stellelement als ein sich im Wesentlichen parallel zu den Lenkern der Parallelogramm-Aufhängung erstreckender Stelllenker ausgebildet ist. Der Stelllenker erlaubt eine einfache und bedienerfreundliche Einstellung der Arbeitstiefe. Insbesondere in starrer Stelllenker kann sich als vorteilhaft im Hinblick auf eine präzise Einstellung der Arbeitstiefe herausstellen.

Des Weiteren wird vorgeschlagen, dass das als Druckelement ausgebildete Stellelement über eine Exzenterelement mit dem Aktor wirkverbunden ist. Über ein solches Exzenterelement lassen sich die Steuerkräfte des Aktors auf einfache Art und Weise auf das Stellelement übertragen.

Es hat sich ferner als vorteilhaft herausgestellt, wenn mehrere Stellelemente zur gleichmäßigen Einstellung der Arbeitstiefe mehrerer Schare über einen gemeinsamen Aktor betätigbar sind. Es ergibt sich eine Anordnung, bei welcher die Arbeitstiefe mehrerer Schare synchron eingestellt werden kann, so dass sich eine gleichmäßige Arbeitstiefe ergibt. Es können beispielsweise die Stellelemente sämtliche Schare über einen gemeinsamen Aktor betätigbar sein, so dass sich die Arbeitstiefe aller Schare gleichmäßig einstellen lässt. Alternativ kann sich eine Ausgestaltung als vorteilhaft erweisen, bei welcher einige der Schare gruppenweise über einen gemeinsamen Aktor betätigt werden können. Hierdurch können an ein und demselben Arbeitsgerät gleichzeitig unterschiedliche Arbeitstiefen eingestellt werden.

In diesem Zusammenhang wird vorgeschlagen, dass der auf das Schar wirkende Schardruck über eine an einem der Lenker der Parallelogramm-Aufhängung angreifende Schardruckeinstellung einstellbar ist. Es ergibt sich eine zuverlässige und genaue Schardruckeinstellung. Vorzugsweise greift die Schardruckeinstellung an dem Unterlenker der Parallelogramm-Aufhängung an.

Bevorzugt ist zudem eine Aufstandskrafterfassung zur Erfassung der zwischen der Schareinheit und der Nutzfläche wirkenden Aufstandskraft. Bevorzugt lässt sich über die Aufstandskrafterfassung die zwischen der Tiefenführungsrolle und der Nutzfläche wirkende Aufstandskraft detektieren.

Über eine akkurate Aufstandskrafterfassung lässt sich der auf das Schar wirkende Schardrucks genauer bestimmen. In der Regel darf der Schardruck einen gewissen Höchstwert nicht überschreiten, um eine zu starke Verdichtung, insbesondere durch die Tiefenführungsrolle und/oder das Schar, des Bodens der Nutzfläche zu vermeiden. Andererseits ist oftmals ein gewisser Mindestschardruck erforderlich, um die vorgegebene Arbeitstiefe des Schars und damit auch die vorgegebene Ablagetiefe einer Sämaschine, auch unter ungünstigen Bodenbearbeitungsbedingungen zuverlässig einhalten zu können. Ferner kann eine Aufstandskrafterfassung zur Kartierung der Nutzfläche genutzt werden, wozu die erfassten Aufstandskräfte aufgezeichnet werden können. Über die Aufstandskraftdaten lassen sich Rückschlüsse auf Eigenschaften und Parameter der Nutzfläche ziehen, welche beispielsweise für nachfolgende Bodenbearbeitungsprozesse von Nutzen sein können.

In einer vorteilhaften Weiterbildung der Erfindung weist jede Schareinheit eine eigene Aufstandskrafterfassung zur Erfassung der zwischen der Schareinheit und der Nutzfläche wirkenden Aufstandskraft auf. Durch eine solche Ausgestaltung lässt sich die Aufstandskraft für jede Schareinheit separat ermitteln. Alternativ können nur ausgewählte Schareinheiten mit einer Aufstandskrafterfassung ausgestattet sein.

Es wird ferner vorgeschlagen, dass die Aufstandskrafterfassung einen Kraftsensor umfasst, welcher an der Tiefenführungsrolle, dem Stellelement und/oder dem Schwenkhebel angeordnet ist. Eine Anordnung des Kraftsensors an der Tiefenführungsrolle, insbesondere an deren Nabe, ermöglicht eine direkte Erfassung der Aufstandskraft. Alternativ oder zusätzlich kann der Kraftsensor auch an dem Schwenkhebel angeordnet sein, etwa im Bereich des stellelementseitigen Aufnahmepunktes oder beidseitig des Drehpunkts des Schwenkhebels. An dem Schwenkhebel angeordnete Kraftsensoren zeichnen sich durch ihre wartungsfreundlich leichte Zugänglichkeit aus. Die Kraftsensoren können beispielsweise als Kraftaufnehmer oder Messdosen ausgebildet sein.

Im Hinblick auf eine zuverlässige Erfassung der Aufstandskraft hat es sich als vorteilhaft herausgestellt, wenn die Aufstandskrafterfassung mit dem Stellelement wirkverbunden ist. Insbesondere kann ein Kraftsensor mit dem Stellelement wirkverbunden sein. Die zur Einstellung der Arbeitstiefe wirkende Stellkraft kann dabei zur proportionalen Ermittlung der Aufstandskraft genutzt werden. Alternativ oder zusätzlich kann ein Kraftsensor auch im Bereich des Aktors der Arbeitstiefeneinstellung angeordnet sein. Hierdurch lässt sich etwa eine gemittelte Gesamt-Aufstandskraft für sämtliche mit der Arbeitstiefeneinstellung gekoppelten Schareinheiten ermitteln.

Zudem wird eine vorteilhafte Weiterbildung vorgeschlagen, welche sich durch eine Lageerfassung der rahmenseitigen Gelenkpunkte auszeichnet. Hierdurch lässt sich die Lage der Parallelogramm-Aufhängung, insbesondere deren Verkippung relativ zu der Arbeitsmaschine, zuverlässig erfassen. Bei detektierten Fehlpositionierungen können entsprechende Korrekturen vorgenommen werden und insbesondere die Parallelogramm-Aufhängung wieder in die korrekte Lage bewegt werden. Zudem kann eine Lageerfassung im Zusammenhang mit einer entsprechenden Steuerung eine weitere Einstellmöglichkeit für die Arbeitstiefe eröffnen. Allerdings besteht bei einer Einstellung der Arbeitstiefe durch Verkippen der Parallelogramm-Aufhängung die Gefahr eines sich bei ändernden Anstellwinkels der Schare je nach eingestellter Arbeitstiefe.

Eine weitere bevorzugte Ausführungsform sieht vor, dass eine Schareinheit mehrere in Bewegungsrichtung nebeneinander und/oder hintereinander angeordnete Schare aufweist. Die Schare können dabei ein- oder beidseitig des Arms oder des Trägers angeordnet sein. Die Schare können in Bewegungsrichtung im gleichen Abstand oder versetzt in unterschiedlichen Abständen zum Maschinenrahmen angeordnet sein. Bei unterschiedlichen Abständen ergibt sich der Vorteil, dass die einzelnen Schare sich bei der Bodenbearbeitung weniger stark stören. Bei einer versetzten Anordnung kann der Abstand zwischen den Scharen quer zur Bewegungsrichtung geringer sein.

Es wird weiter vorgeschlagen, dass das oder die Schare als Säschare oder als Hackschare ausgebildet sind. Die Schare können insbesondere als Scheibenschare oder Zinkenschare ausgebildet sein. Alternativ sind weitere Scharformen denkbar, welche beispielsweise an die jeweilige Bodenbearbeitungsaufgabe angepasst sein können.

Weitere Einzelheiten und Vorteile der Erfindung werden nachfolgend unter Zuhilfenahme der beigefügten Zeichnungen von Ausführungsbeispielen erläutert. Darin zeigen:
- Fig. 1a und 1b: zwei perspektivische, teilweise geschnittene Seitenansichten einer über eine Parallelogramm-Aufhängung aufgehängten Schareinheit einer landwirtschaftlichen Arbeitsmaschine;
- Fig. 1c und 1d: zwei weitere perspektivische Seitenansichten der Schareinheit gemäß der Darstellungen in Fig. 1a und b;
- Fig. 1e und 1f: zwei Seitenansichten der Schareinheit gemäß der Darstellungen in Fig. 1a und b;
- Fig. 2a bis 2c: drei weitere teilweise perspektivische Seitenansichten der Schareinheit gemäß Fig. 1a mit demontierten Scharen;
- Fig. 3a bis 3c: drei teilweise perspektivische Seitenansichten einer weiteren Schareinheit einer landwirtschaftlichen Arbeitsmaschine;
- Fig. 4a bis 4d: vier weitere perspektivische Seitenansichten der Schareinheit gemäß Fig. 3a bis c;
- Fig. 5a bis 5c: drei teilweise perspektivische, teilweise geschnittene Seitenansichten weiterer Schareinheiten einer landwirtschaftlichen Arbeitsmaschine, sowie
- Fig. 6a und 6b: zwei schematische Prinzipdarstellungen einer über eine Parallelogramm-Aufhängung aufgehängten Schareinheit einer landwirtschaftlichen Arbeitsmaschine.

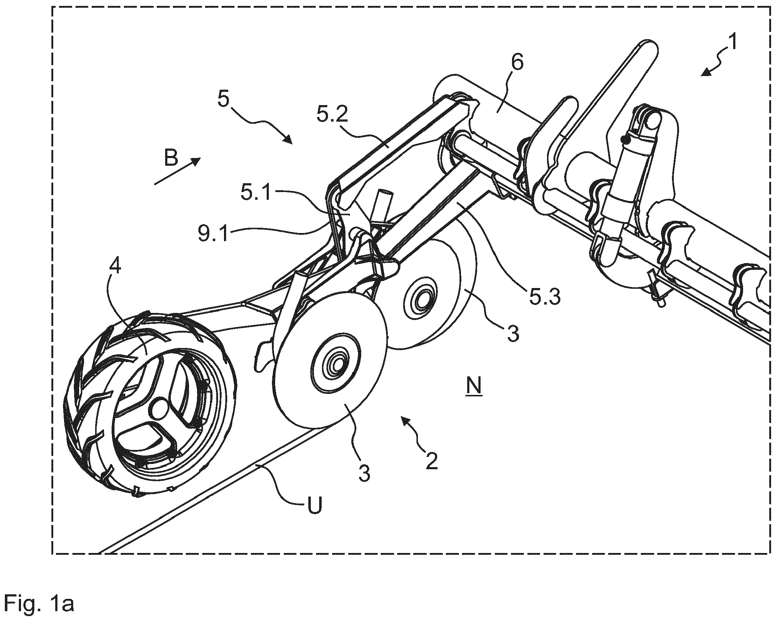

Die Darstellungen in den Fig. 1a bis 6b zeigen in verschiedenen ausschnittsweisen Ansichten eine landwirtschaftliche Arbeitsmaschine 1. Bei der dargestellten Arbeitsmaschine 1 handelt es sich um eine Sämaschine zum Ausbringen von Saatgut auf einer landwirtschaftlichen Nutzfläche N. Alternativ kann es sich hierbei jedoch auch um eine andere landwirtschaftliche Arbeitsmaschine 1, insbesondere eine Bodenbearbeitungsmaschine, handeln.

Die Arbeitsmaschine 1 kann an eine in den Figuren nicht dargestellte Zugmaschine, wie etwa einem Schlepper oder Traktor, angebaut, angehängt oder angekuppelt sein. Über die Verbindung mit der Zugmaschine kann die Arbeitsmaschine 1 in Bewegungsrichtung B über die landwirtschaftliche Nutzfläche N bewegt werden. Die Bewegung erfolgt in der Regel bahnenartig. Alternativ kann die Arbeitsmaschine 1 selbstfahrend, insbesondere auch autonom selbstfahrend, ausgebildet sein.

Bei der Bewegung der Arbeitsmaschine 1 in Bewegungsrichtung B über die Nutzfläche N erfolgt eine rillenartige Bearbeitung des Bodens der Nutzfläche N sowie eine Aussaat von Saatgut in die entsprechenden rillenartigen Säfurchen U. Es kann sich bei der Nutzfläche N beispielsweise um einen Acker oder ein Feld zum Anbau von landwirtschaftlichen Nutzpflanzen, insbesondere Getreide oder auch Gemüse, handeln.

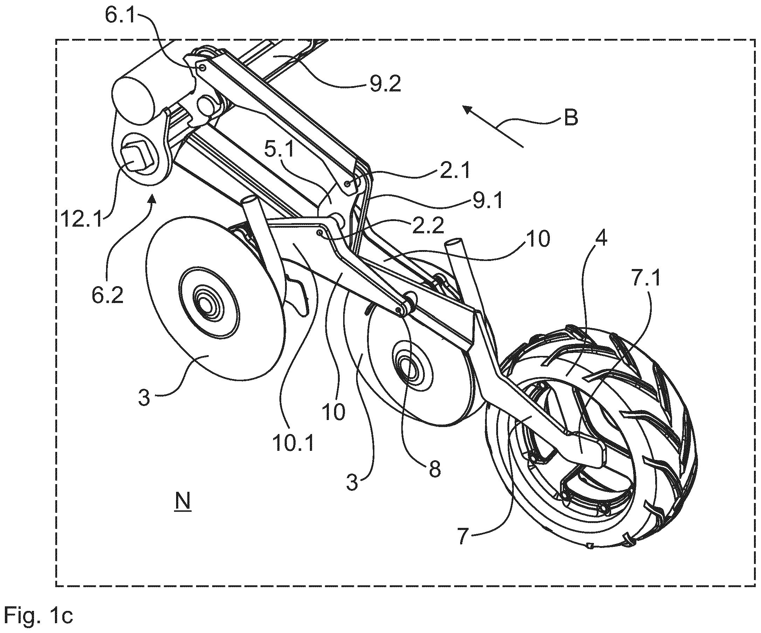

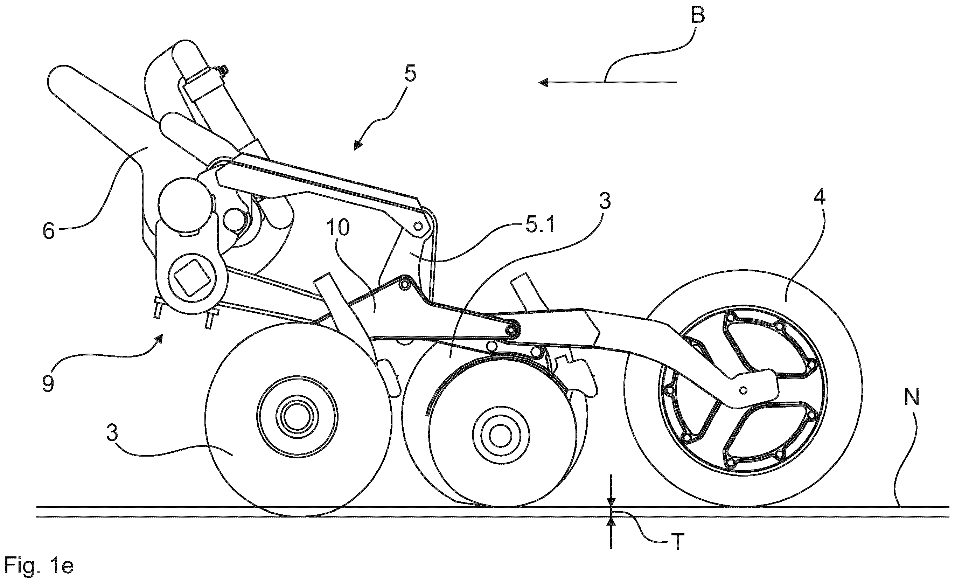

Im Folgenden wird anhand der Darstellungen in Fig. 1a, 1c und 1e der grundsätzliche Aufbau der landwirtschaftlichen Arbeitsmaschine 1 erläutert. Die Arbeitsmaschine 1 umfasst einen Maschinenrahmen 6, welcher sich zumindest teilweise quer zu der Bewegungsrichtung B erstreckt, vgl. Fig. 1a. Mit dem Maschinenrahmen 6 sind mehrere parallel zueinander angeordnete Schareinheiten 2 verbunden, von denen in den Darstellungen gemäß Fig. 1a, 1c und 1e jeweils nur eine Schareinheit 2 dargestellt ist.

Die Schareinheit 2 erstreckt sich armartig von dem Maschinenrahmen 6 in Bewegungsrichtung B nach hinten. An der Schareinheit 2 sind im Ausführungsbeispiel gemäß Fig. 1a, 1c und 1e zwei Schare 3 angeordnet. Bei den Scharen 3 handelt es sich um zwei Scheibensäschare zur Erzeugung von Säfurchen U in der Nutzfläche N. Die Schare 3 sind sowohl in als auch quer zur Bewegungsrichtung B versetzt an der Schareinheit 2 angeordnet, vgl. Fig. 1a. Somit lassen sich mit der Schareinheit 2 zwei parallele Säfurchen U zur Ablage von Saatgut in der Nutzfläche N erzeugen. Alternativ zu einfachen Scheibenscharen können auch Doppelscheibenschare, Zinkenschare oder sonstige Schare eingesetzt werden.

Zur Führung über die Nutzfläche N weist die Schareinheit 2 an deren hinteren Ende eine Tiefenführungsrolle 4 auf, vgl. Fig. 1e. Die Tiefenführungsrolle 4 ist nach Art eines Rads zum Abrollen über die Nutzfläche N ausgebildet. Die Tiefenführungsrolle 4 sorgt für eine Abstützung der Schareinheit 2 gegenüber der Nutzfläche N und eine zuverlässige Einhaltung der eingestellten Arbeitstiefe T der Schare 3 bei der Bodenbearbeitung.

Über die auf die Tiefenführungsrolle 4 wirkende Arbeitstiefeneinstellung 9 lässt sich die Arbeitstiefe T einstellen. Die Arbeitstiefe T wird dabei durch den relativen Abstand der Schare 3 zu der Tiefenführungsrolle 4 in vertikaler Richtung bestimmt. Je größer der vertikale Abstand zwischen den Scharen 3 und der Tiefenführungsrolle 4 ist, desto größer ist die Arbeitstiefe T, vgl. auch Fig. 1e. Neben den Scharen 3 und der Tiefenführungsrolle 4 kann die Schareinheit 2 je nach Anwendungsweitere Vorrichtungen, Komponenten oder Bauteile aufweisen, wie etwa Abstreifer, Striegel, Reinigungsrollen, Führungsbleche usw.

Zum Ausgleich von Bodenunebenheiten der Nutzfläche N ist die Schareinheit 2 über eine Parallelogramm-Aufhängung 5 mit dem Maschinenrahmen 6 verbunden, vgl. Fig. 1a, 1c und 1e. Die Parallelogramm-Aufhängung 5 umfasst einen Arm 5.1, an welchem die Schareinheit 2 befestigt ist. Der Arm 5.1 ist im Bereich seiner Enden an jeweils einem Lenker 5.2, 5.3 angelenkt, vgl. Fig. 1a. Der Arm 5.1 wird während der Bodenbearbeitung über die sich parallel zueinander erstreckenden Lenker 5.2, 5.3 parallelgeführt. Im Falle von Bodenunebenheiten, insbesondere beim Auftreten von Wellen oder Gräben quer zur Bewegungsrichtung B, sorgt die Parallelogramm-Aufhängung 5 für einen entsprechenden Ausgleich des aus dem Überfahren der Bodenunebenheit resultierenden Versatzes.

Die Schare 3 greifen zum Erzeugen der Säfurche U in einem gewissen Anstellwinkel in die Nutzfläche N ein. Der Anstellwinkel ist in der Regel an die jeweilige Bodenbearbeitungsaufgabe und die konstruktiven Eigenschaften der Arbeitsmaschine 1 angepasst. Eine Änderung des Anstellwinkels, welche etwa aus einer Veränderung der Arbeitstiefe T durch Verkippen oder Verstellen der Parallelogramm-Aufhängung 5 resultieren kann, kann zu ungewollten Bodenbearbeitungsergebnissen oder zu unerwünschten Belastungszuständen der Schare 3 führen.

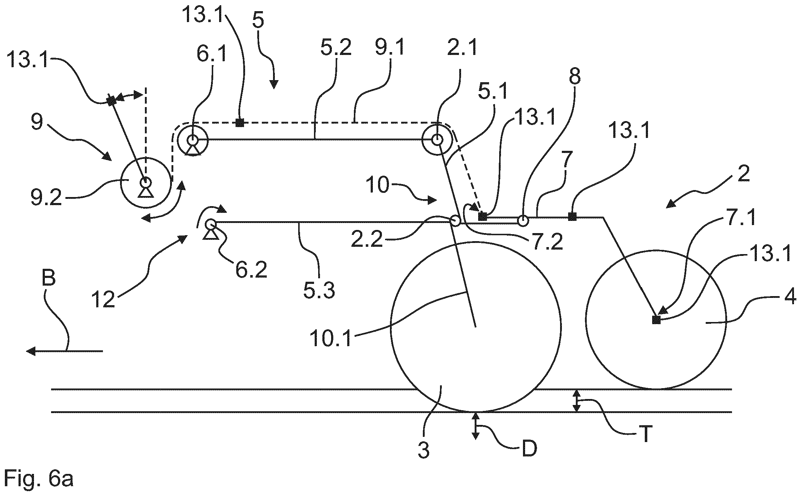

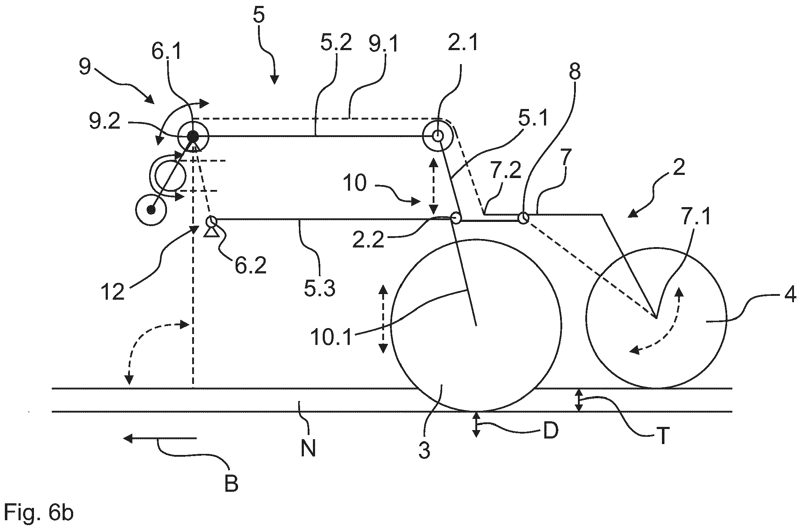

Um bei einer Änderung der Arbeitstiefe T den Anstellwinkel der Schare 3 beizubehalten, ist die Tiefenführungsrolle 4 gegenüber der Parallelogramm-Aufhängung 5 bewegbar angeordnet, was nachfolgend zunächst anhand der schematischen Prinzipdarstellungen in Fig. 6a und 6b erläutert wird.

Die Darstellungen in den Fig. 6a und b zeigen schematisch eine Schareinheit 2 einer landwirtschaftlichen Arbeitsmaschine 1. Die Schareinheit 2 umfasst ein scheibenartiges Schar 3 sowie eine in Bewegungsrichtung B hinter dem Schar 3 angeordnete Tiefenführungsrolle 4. Die Schareinheit 2 ist über eine Parallelogramm-Aufhängung 5 an einem Maschinenrahmen 6 angelenkt.

Die Parallelogramm-Aufhängung 5 weist zwei parallel zueinander angeordnete Lenker 5.2, 5.3 gleicher Länge auf, welche sich im Wesentlichen horizontal in Bewegungsrichtung B erstrecken, vgl. Fig. 6a. Einer der Lenker 5.2 ist oberhalb des anderen Lenkers 5.3 angeordnet. Der Lenker 5.2 ist somit als Oberlenker und der Lenker 5.3 als Unterlenker ausgebildet. Der Oberlenker 6.1 ist in einem Gelenkpunkt 6.1 an dem Maschinenrahmen 6 angelenkt und der Unterlenker 5.3 ist in einem Gelenkpunkt 6.2 an dem Maschinenrahmen 6 angelenkt. Die Gelenkpunkte 6.1, 6.2 erlauben eine Drehbewegung der Lenker 5.2, 5.3 relativ zu dem Maschinenrahmen 6.

An den scharseitigen Enden, d. h. an den dem Maschinenrahmen 6 abgewandten Enden, sind die Lenker 5.2, 5.3 jeweils in einem scharseitigen Gelenkpunkt 2.1, 2.2 mit einem Arm 5.1 verbunden, vgl. Fig. 6a. Der Arm 5.1 erstreckt sich im Wesentlichen vertikal zwischen den scharseitigen Enden der Lenker 5.2, 5.3. Über die Parallelogramm-Aufhängung 5 wird der Arm 5.1 in vertikaler Richtung parallelgeführt. Das Prinzip ist von entsprechenden Parallelogramm-Führungen aus dem Stand der Technik bekannt.

Wie dies den Prinzipdarstellungen in Fig. 6a und b entnommen werden kann, ist der Arm 5.1 mit einem Koppelelement 10 verbunden, welches somit ebenfalls über die Parallelogramm-Aufhängung 5 gegenüber dem Maschinenrahmen 6 parallelgeführt ist. Das Koppelelement 10 dient der Verbindung der Parallelogramm-Aufhängung 5 mit der Schareinheit 2 und weist eine Scharanbindung 10.1 zur Anbindung des Schars 3 sowie einen Drehpunkt 8 zur Lagerung eines Schwenkhebels 7 auf, welcher mit der Tiefenführungsrolle 4 verbunden ist. Über das Koppelelement 10 ist das Schar 3 somit parallelgeführt, wodurch sich Unebenheiten, Kuppen oder Wellen der Nutzfläche N ausgleichen lassen.

Das Koppelelement 10 ist gemäß der Prinzipskizzen in Fig. 6a und b als dreiarmiges Bauteil ausgeführt, wobei einer der Arme den Arm 5.1 der Parallelogramm-Aufhängung 5 bildet, ein weiterer Arm dient der Anbindung des Schars 3 und ein dritter Arm fungiert als Verbindungselement zur Lagerung der Tiefenführungsrolle 4 über den Schwenkhebel 7.

Die Arbeitstiefe T des Schars 3 lässt sich über eine Arbeitstiefeneinstellung 9 einstellen, was nachfolgend ebenfalls anhand der Darstellungen in Fig. 6a und b erläutert wird.

Die Arbeitstiefeneinstellung 9 ist derart mit der Tiefenführungsrolle 4 verbunden, dass diese gegenüber der Parallelogramm-Aufhängung 5 bewegt werden kann. Die Bewegbarkeit der Tiefenführungsrolle 4 relativ zu der Parallelogramm-Aufhängung 5 wird über den Schwenkhebel 7 sichergestellt. Der Schwenkhebel 7 weist an einem ersten Ende 7.1 die Tiefenführungsrolle 4 auf, wofür ein entsprechendes Drehlager vorgesehen ist. Das zweite Ende 7.2 des Schwenkhebels ist mit der Arbeitstiefeneinstellung 9 gekoppelt.

Der Schwenkhebel 7 ist, wie vorstehend bereits beschrieben, um den über das Koppelelement 10 an der Parallelogramm-Aufhängung 5 angeordneten Drehpunkt 8 drehbar gelagert. Der Drehpunkt 8 befindet sich zwischen den Enden 7.1, 7.2 des Schwenkhebels 7. Das mit der Tiefenführungsrolle 4 verbundene Ende 7.1 und das mit der Arbeitstiefeneinstellung 9 verbundene Ende 7.2 sind daher wippenartig um den Drehpunkt 8 schwenkbar. Bewegt sich das erste Ende 7.1 in eine erste Richtung, bewegt sich das zweite Ende 7.2 in die entgegengesetzte Richtung und umgekehrt, vgl. Fig. 6a. Insoweit ist der zwischen dem ersten Ende 7.1 und dem zweiten Ende 7.2 abgewinkelt ausgeführte Schwenkhebel 7 nach Art einer Wippe oder Schwinge um den Drehpunkt 8 schwenkbar angeordnet.

Die Einstellung der Arbeitstiefe T über die Arbeitstiefeneinstellung 9 erfolgt durch Aufbringen einer Stellweges mithilfe einer Stellkraft auf die Tiefenführungsrolle 4. Die Stellkraft ist zu diesem Zweck auf den mit der Tiefenführungsrolle 4 verbundene Schwenkhebel 7 aufbringbar. Zur Kraftübertragung ist ein Stellelement 9.1 vorgesehen, welches mit dem zweiten Ende 7.2 des Schwenkhebels 7 gekoppelt ist, vgl. Fig. 6a.

Das Stellelement 9.1 ist mit einem Aktor 9.2 gekoppelt. Über den Aktor 9.2 ist das Stellelement 9.1 derart betätigbar, dass das zweite Ende 7.2 des Schwenkhebels 7 entsprechend bewegt werden kann, so dass sich der Stellweg ergibt. Die Bewegung des zweiten Endes 7.2 des Schwenkhebels 7 resultiert wegen der wippenartigen Lagerung des Schwenkhebels 7 in dem Drehpunkt 8 in einer entsprechenden Bewegung des anderen Endes 7.1. Da das Ende 7.1 mit der Tiefenführungsrolle 4 verbunden ist, kann somit über den Aktor 9.2 und das Stellelement 9.1 die Tiefenführungsrolle 4 zur Einstellung der Arbeitstiefe T bewegt werden. Bei der Einstellung der Arbeitstiefe T findet kein unerwünschtes Verkippen, Verschieben oder Verzerren der Parallelogramm-Aufhängung 5 statt, so dass der Anstellwinkel des Schars 3 unabhängig von der eingestellten Arbeitstiefe T stets gleich ist.

Gemäß der Darstellung in Fig. 6a führt das Aufbringen einer Zugkraft auf das Stellelement 9.1 zu einer Aufwärtsbewegung des zweiten Endes 7.2 des Schwenkhebels 7. Der Schwenkhebel 7 schwenkt im Uhrzeigersinn um den Drehpunkt 8, so dass sich die Tiefenführungsrolle 4 nach unten bewegt. Die Arbeitstiefe T wird somit verringert.

Umgekehrt führt das Aufbringen einer Druckkraft auf das Stellelement 9.1 zu einer Abwärtsbewegung des zweiten Endes 7.2 des Schwenkhebels 7. Der Schwenkhebel 7 schwenkt entsprechend im Gegenuhrzeigersinn um den Drehpunkt 8, so dass sich die Tiefenführungsrolle 4 nach oben bewegt. Die Arbeitstiefe T lässt sich auf diese Weise erhöhen.

Das in den Darstellung gemäß Fig. 6a und b gestrichelt dargestellte Stellelement 9.1 kann als Zug- oder als Zug-/Druckelement ausgebildet sein. Bei einer Ausgestaltung als Zugelement können nur Zugkräfte über das Stellelement 9.1 übertragen werden; bei einer Ausgestaltung als Zug-/Druckelement hingegen sowohl Zug- als auch Druckkräfte.

Aufgrund des Eigengewichts der Tiefenführungsrolle 4 und der wippenartigen Lagerung des Schwenkhebels 7 reicht oftmals jedoch die Übertragung von Zugkräften aus, um sowohl eine Reduzierung als auch eine Erhöhung der Arbeitstiefe T herbeizuführen. Wird die auf das als Zugelement ausgebildete Stellelement 9.1 aufgebrachte Stellkraft unter einen gewissen Mindestwert reduziert, kann der Schwenkhebel 7 selbsttätig im Gegenuhrzeigersinn um den Drehpunkt 8 schwenken, worauf sich die Arbeitstiefe T erhöht.

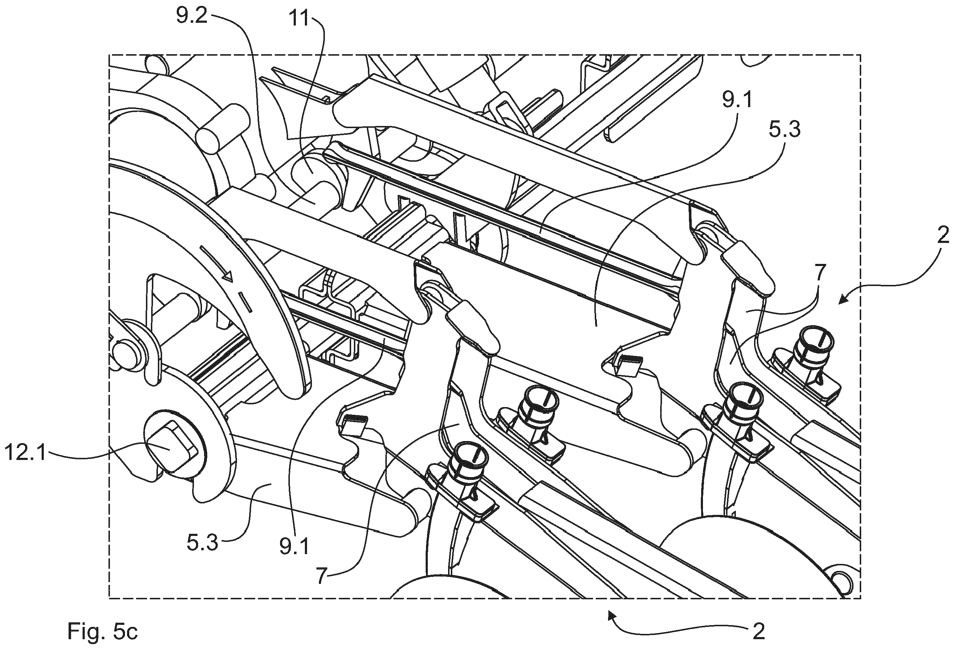

Der Aktor 9.2 zum Aufbringen des Stellweges mithilfe der Stellkraft ist als drehbare Steuerwelle ausgeführt, vgl. Fig. 6a. Die Steuerwelle erstreckt sich quer zu der Bewegungsrichtung B der Arbeitsmaschine 1. Der als Steuerwelle ausgebildete Aktor 9.2 ist derart mit dem Stellelement 9.1 gekoppelt, dass Drehbewegungen des Aktors 9.2 in Stellbewegungen des Stellelements 9.1 umgesetzt werden. Ein als Zugelement ausgebildetes Stellelement 9.1 kann direkt mit dem Aktor 9.2 gekoppelt sein, bei einem als Zug-/Druckelement ausgebildeten Stellelement 9.1 kann ein scheibenartiges Exzenterelement 11 zur Verbindung mit dem Aktor 9.2 vorgesehen sein, vgl. Fig. 5c.

Wie dies der Darstellung in Fig. 6a entnommen werden kann, kann der als Steuerwelle ausgeführte Aktor 6.2 zwischen den beiden rahmenseitigen Gelenkpunkten 6.1, 6.2 an dem Maschinenrahmen 6 angeordnet sein.

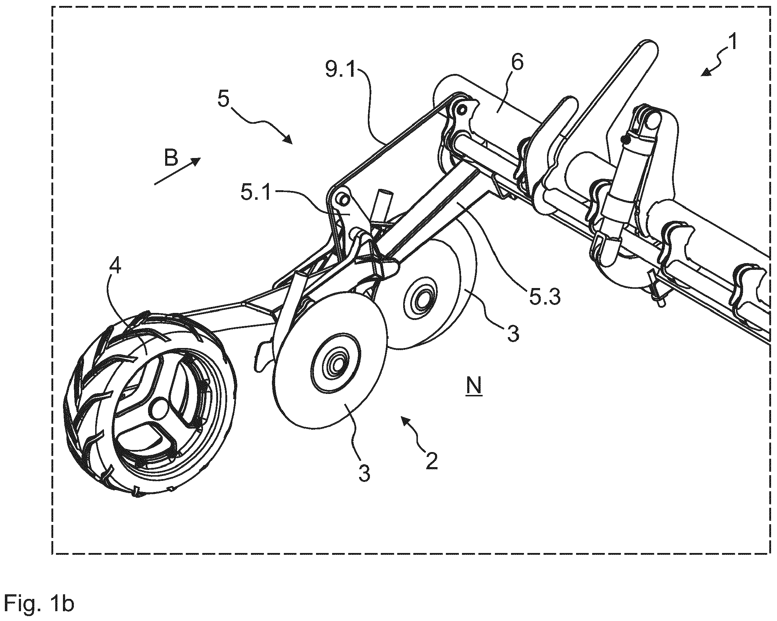

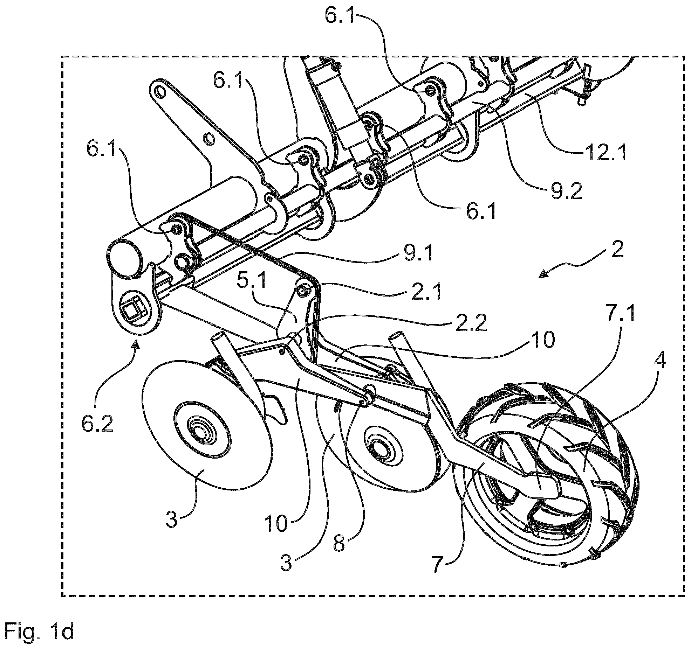

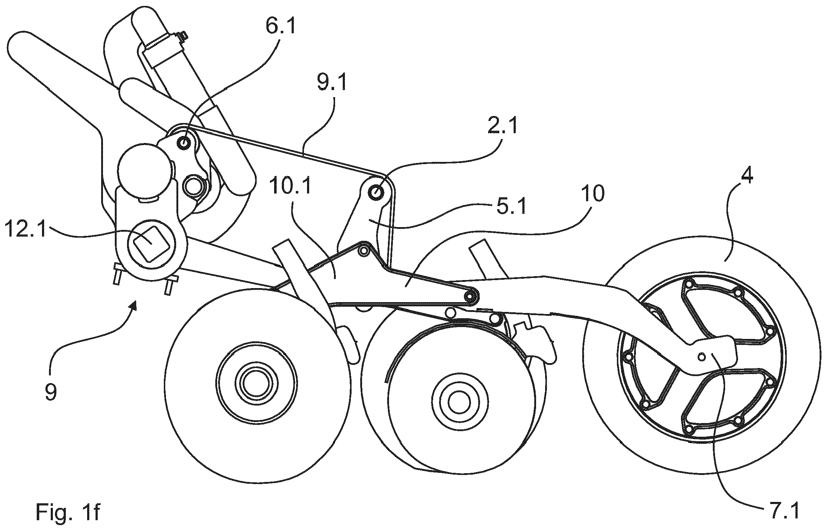

Nachfolgend wird zunächst anhand der Darstellungen in Fig. 1a bis f eine erste Ausführungsform der Arbeitsmaschine 1 vorgestellt, bei welcher das Stellelement 9.1 als Zugelement, nämlich als Seil oder Kette, ausgebildet ist. Die Figuren 1b, 1d und 1f zeigen jeweils die gleiche Ansicht wie die Figuren 1a, 1c und 1e, allerdings ist in den Fig. 1b, 1d und 1f das Stellelement 9.1 deutlicher erkennbar, da jeweils der Oberlenker 5.2 in den Zeichnungen ausgeblendet ist.

In Fig. 1c lässt sich erkennen, dass das in Bewegungsrichtung B links von der Parallelogramm-Aufhängung 5 angeordnete Koppelelement 10 in der dargestellten Ausführungsform plattenartig mit einer dreieckigen Grundform ausgeführt ist. Das Koppelelement 10 ist in dem Gelenkpunkt 2.2 mit dem Arm 5.1 gekoppelt. In Bewegungsrichtung B vor dem Gelenkpunkt 2.2 ist die Scharanbindung 10.1 zur Anbindung des Schars 3 angeordnet. In Bewegungsrichtung B hinter dem Gelenkpunkt 2.2 ist der Drehpunkt 8 angeordnet, in welchem das Koppelelement 10 mit dem Schwenkhebel 7 verbunden ist.

In Bewegungsrichtung B rechts von der Parallelogramm-Aufhängung 5 ist ein weiteres Schar 3 angeordnet, welches ebenfalls über ein Koppelelement 10 mit dem Arm 5.1 der Parallelogramm-Aufhängung 5 verbunden ist. Das Koppelelement 10 des rechten Schars 3 hat eine andere Form, welche aus einer unterschiedlichen Positionierung des rechten Schars 3 resultiert. Das rechte Schar 3 ist nämlich in Bewegungsrichtung B hinter dem linken Schar 3 angeordnet ist, vgl. Fig. 1d.

Der Schwenkhebel 7 ist als mehrfach abgewinkeltes schwingenartiges Bauteil ausgeführt, vgl. bspw. Fig. 1c und e. Die Abwinklungen des Schwenkhebels 7 sind an den Bauraum angepasst. Insbesondere wird durch die abgewinkelte Form Raum für die Tiefenführungsrolle 4 geschaffen, welche an dem ersten Ende 7.1 des Schwenkhebels 7 drehbar befestigt ist. Die Tiefenführungsrolle 4 lässt sich auf montagefreundliche Art und Weise an dem Schwenkhebel 7 befestigen, so dass ein Austausch, etwa zu Wartungszwecken, auf zeitsparende Art und Weise möglich ist.

Das zweite Ende 7.2 des Schwenkhebels 7 ist mit dem Stellelement 9.1 verbunden, vgl. auch Fig. 6a. Das Stellelement 9.1 ist gemäß der Darstellung in Fig. 1a bis 1f als Zugelement ausgebildet, vgl. insb. Fig. 1b, 1d sowie 1f. Das Stellelement 9.1 ist über die Gelenkpunkte 2.1 und 6.1 der Parallelogramm-Aufhängung 5 geführt. Das Stellelement 5.1 verläuft in der Nähe des Arms 5.1 im Wesentlichen vertikal und ist in Bewegungsrichtung B hinter dem Arm 5.1 angeordnet. Wie dies im Vergleich der Darstellungen in Fig. 1a und b erkennbar ist, verläuft das Stellelement 9.1 in unmittelbarer Nähe zu dem Oberlenker 5.2 unterhalb und parallel zu diesem. Alternativ kann das Stellelement 9.1 auch oberhalb des Oberlenkers 5.2 verlaufen. Der Oberlenker 5.2 hat einen U-förmigen Querschnitt und überdeckt das Stellelement 9.1 haubenartig, so dass dieses gegenüber Umwelteinflüssen wie Staub und Verschmutzungen geschützt ist. Der Unterlenker 5.3 ist nach Art einer Trägers ausgebildet.

Das als Zugelement ausgeführte Stellelement 9.1 ist in konstantem Abstand über die Parallelogramm-Aufhängung 5 geführt, vgl. auch die schematische Darstellung gemäß Fig. 6a und b. In den Gelenkpunkten 2.1 sowie 6.1 sind entsprechende Abstandshalter als Führungselemente vorgesehen. Es ergeben sich somit konstante Hebelarme und eine zuverlässige Führung des Stellelements 9.1 über die Parallelogramm-Aufhängung 5.

An seinem dem Schwenkhebel 7 abgewandten Ende ist das Stellelement 9.1 mit dem als drehbare Steuerwelle ausgebildeten Aktor 9.2 verbunden, vgl. bspw. Fig. 1c und d. Durch Betätigung des Aktors 9.2 lässt sich die Arbeitstiefe T einstellen. Das Stellelement 9.1 wird bei Betätigung des Aktors 9.2 auf diesen aufgerollt oder von diesem abgerollt. Insoweit bilden das als Zugelement ausgebildete Stellelement 9.1 und der Aktor 9.2 eine Winde.

Die Betätigung des Aktors 9.2 kann dabei manuell erfolgen, beispielsweise durch entsprechende Bedienbefehle des Bedienpersonals der Arbeitsmaschine 1 oder der Zugmaschine. Alternativ ist eine automatische Steuerung des Aktors 9.2 denkbar. Ferner kann der Aktor 9.2 steuerungstechnisch in den Steuerkreis und/oder die Bordelektronik der Arbeitsmaschine 1 oder der Zugmaschine eingebunden sein.

Wie dies der Darstellung in Fig. 1d entnommen werden kann, ist der als Steuerwelle ausgebildete Aktor 9.2 zur Verbindung mit mehreren Stellelementen 9.1 ausgebildet. In der Fig. 1d sind etwa mehrere parallel zueinander an dem Maschinenrahmen 6 angeordnete Gelenkpunkte 6.1 dargestellt, über welche die Stellelemente 9.1 benachbarter Schareinheiten 2 geführt werden können. Durch Betätigung des einen Aktors 9.2 kann die Arbeitstiefe T für die Schare 3 aller mit dem Aktor 9.2 verbundenen Schareinheiten 2 eingestellt werden.

Dabei sind Anordnungen denkbar, bei denen die Arbeitstiefe T der Schare 3 sämtlicher Schareinheiten 2 über ein und denselben Aktor 9.2 einstellbar ist. Alternativ können die Schareinheiten 2 gruppen- oder segmentweise zusammengefasst sein, so dass die Arbeitstiefe T der Schare 3 der jeweiligen Gruppe von Schareinheiten 2 über denselben Aktor 9.2 einstellbar ist. Es kann jedoch auch vorteilhaft sein, dass jeder Schareinheit 2 ein eigener Aktor 9.2 und somit eine separate Arbeitstiefeneinstellung 9 zugeordnet ist, über welche die Arbeitstiefe T des jeweiligen Schars 3 separat einstellbar ist. An einer Arbeitsmaschine 1 können somit unterschiedliche Arbeitstiefen T eingestellt werden.

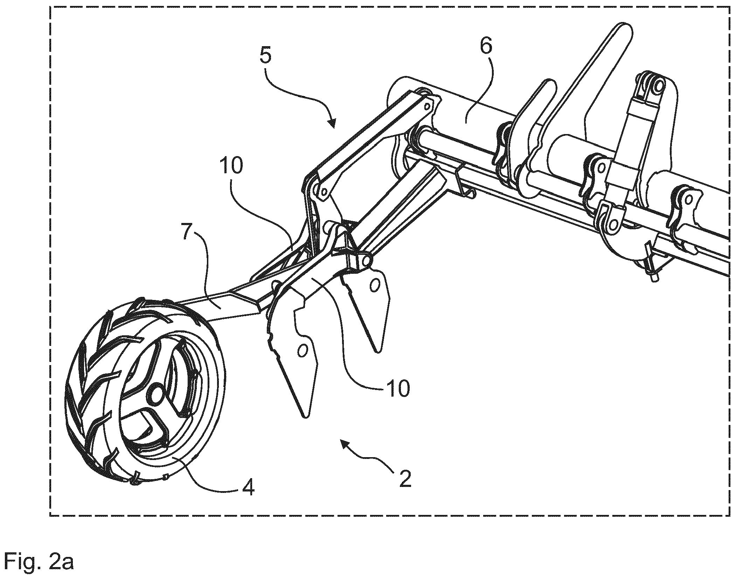

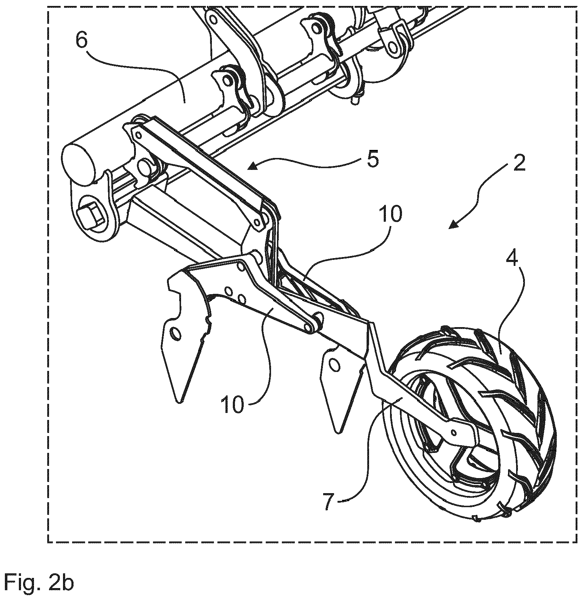

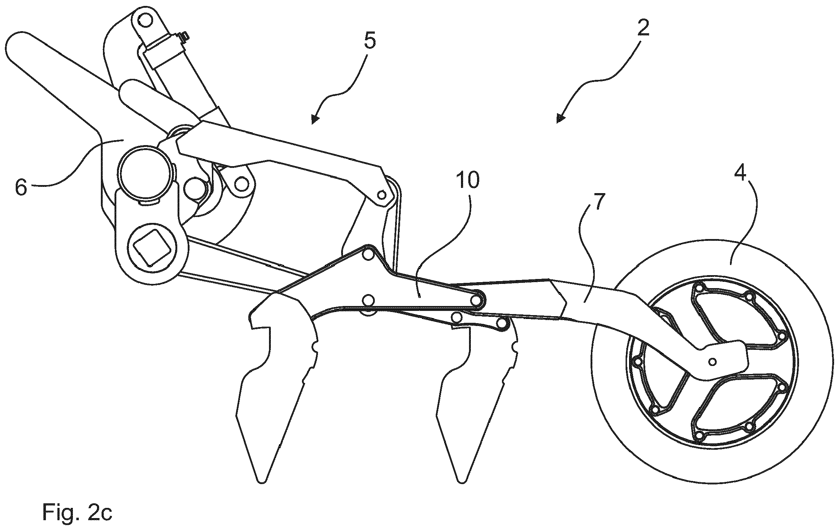

Die Darstellungen in den Fig. 2a bis c zeigen wiederum die Arbeitsmaschine 1 mit der Schareinheit 2 gemäß Fig. 1a bis f, wobei die Schare 3 demontiert sind. Die Darstellungen lassen insbesondere die Anschlussstellen und Befestigungspunkte für die Schare 3 erkennen. Ferner werden der Aufbau und die Gestalt der Koppelelemente 10 deutlich, welcher sich zwischen dem linken und dem rechten Schar 3 unterscheidet. Insbesondere ist in Fig. 2a erkennbar, dass das Koppelelement 10 zur Anbindung des rechten Schars 3 eine im Wesentlichen T-förmige Gestalt aufweist. Die Form der Koppelelemente 10 ist an die baulichen Gegebenheiten und insbesondere an die vorgegebenen Positionen der Schare 3 angepasst.

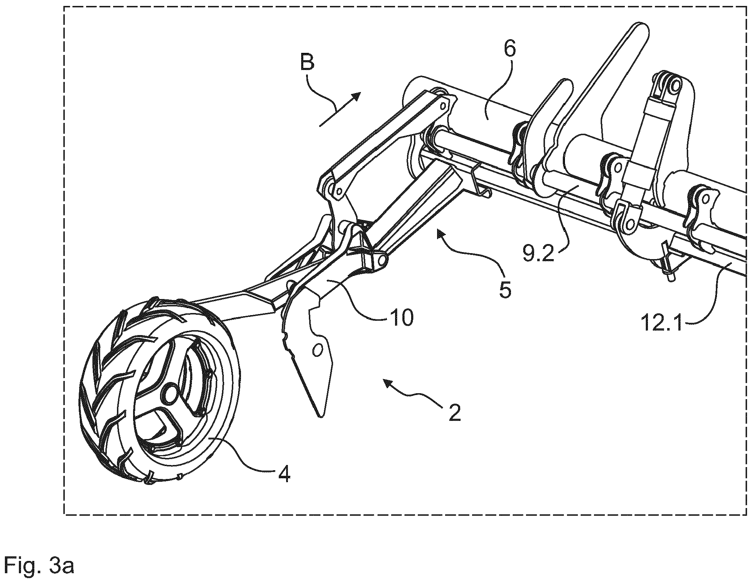

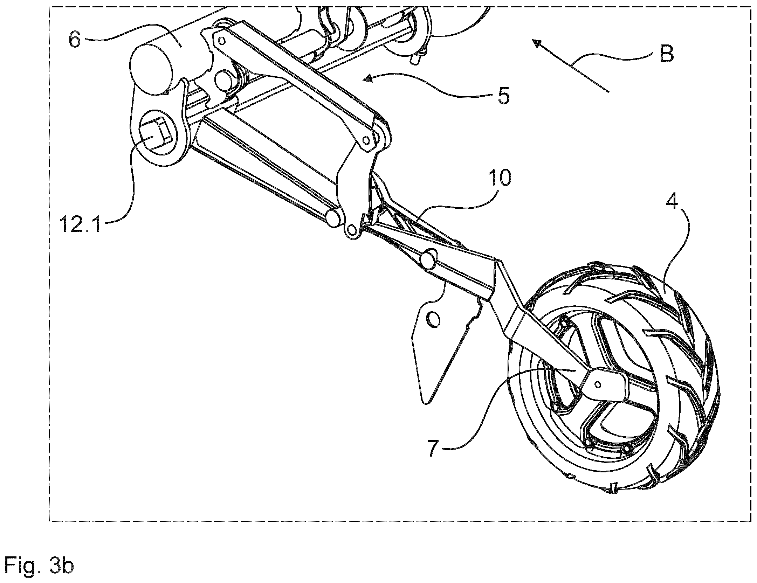

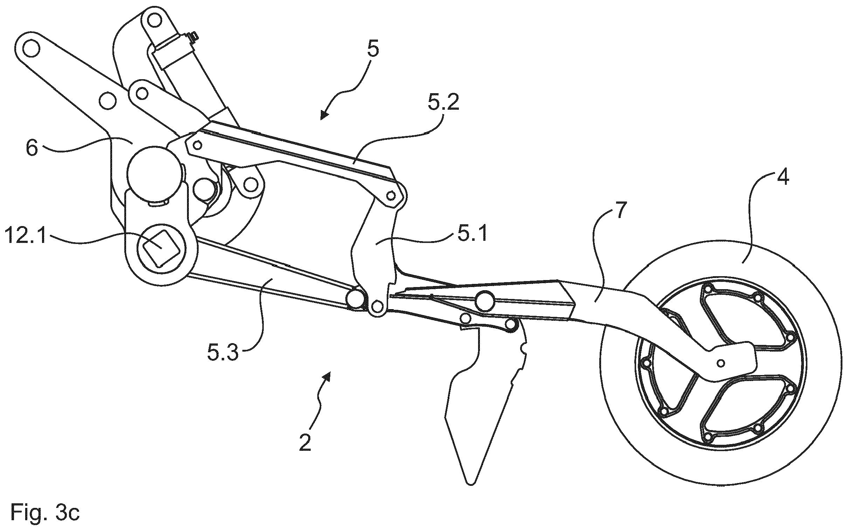

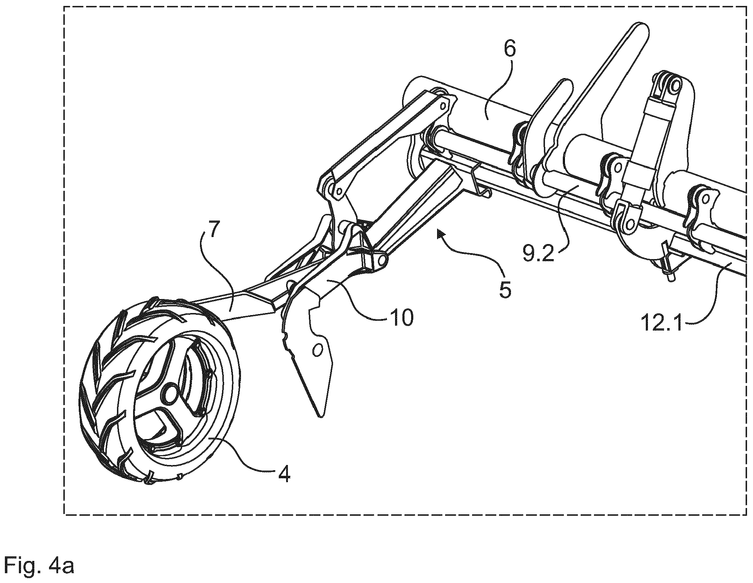

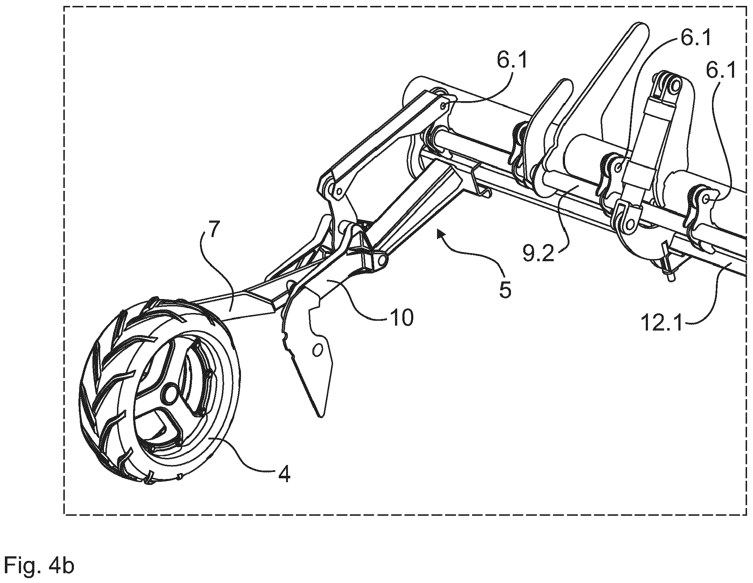

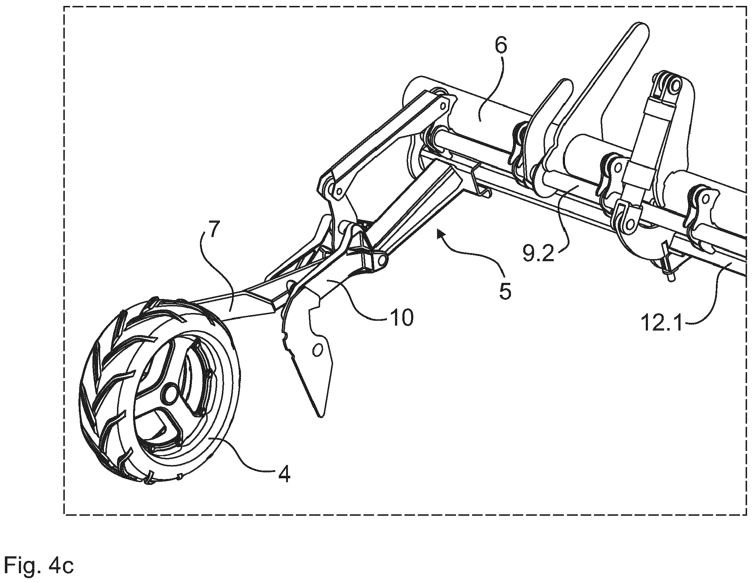

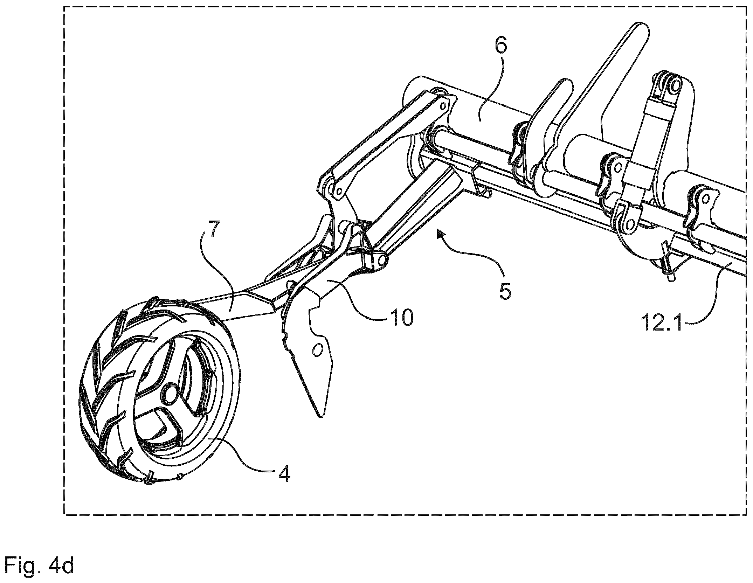

Die Darstellungen in den Fig. 3a bis c sowie 4a bis d zeigen die Arbeitsmaschine 1 mit einer etwas abgewandelten Schareinheit 2. Bei der dargestellten Ausführungsform ist nur ein Schar 3 vorgesehen, welches in den Fig. 3a bis 4d jedoch nicht dargestellt ist. Die Befestigungsstellen zur Befestigung des Schars 3 sind jedoch erkennbar. Das entsprechende Schar 3 wird in Bewegungsrichtung B rechts von der Parallelogramm-Aufhängung 5 montiert, vgl. Fig. 3a. Zudem lassen die Darstellungen in Fig. 4a bis d den als Steuerwelle ausgebildeten Aktor 9.3 als Bestandteil der Arbeitstiefeneinstellung 9 in großer Detailtiefe erkennen.

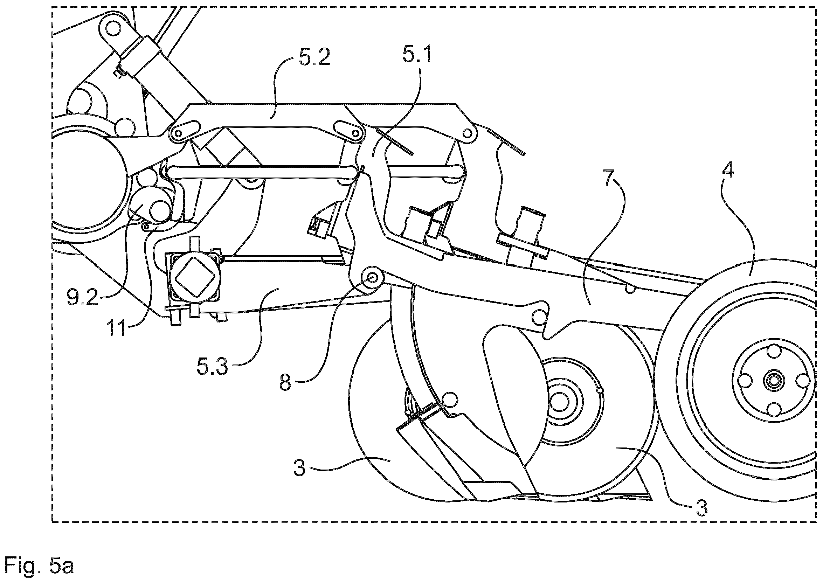

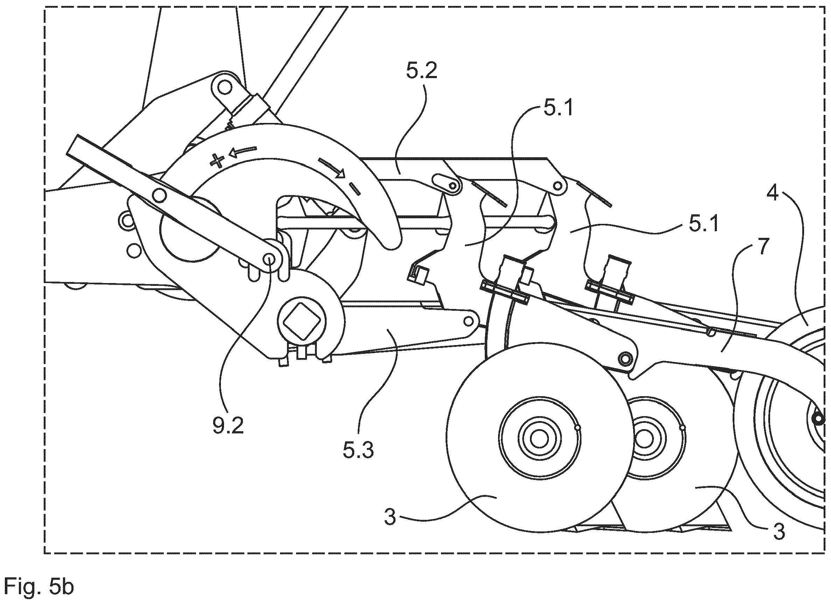

Anstelle eines Zugelements kann das Stellelement 9.1 auch als Druckelement ausgebildet sein, wie dies nachfolgend anhand der Darstellungen in Fig. 5a bis c erläutert wird. Die Fig. 5a bis c zeigen ausschnittsweise eine weitere Arbeitsmaschine 1 mit einer Vielzahl von Schareinheiten 2, von denen in Fig. 5b beispielhaft zwei Schareinheiten 2 dargestellt sind. Analog zu den vorstehend beschriebenen Ausführungsformen sind die Schareinheiten 2 über eine Parallelogramm-Aufhängung 5 mit dem Maschinenrahmen 6 verbunden, vgl. Fig. 5a. Die Parallelogramm-Aufhängung 5 umfasst jeweils einen Oberlenker 5.2 mit einem U-förmigen Querschnittsprofil, einen Unterlenker 5.3 und einen Arm 5.1. Die parallel zueinander angeordneten Ober- und Unterlenker 5.2, 5.3 sind je Schareinheit 2 gleich lang. Quer zur Bewegungsrichtung B benachbart angeordnete Ober- und Unterlenker 5.2, 5.3 weisen jedoch unterschiedliche Längen auf, vgl. Fig. 5a.

Die Unterlenker 5.3 weisen ebenfalls einen U-förmigen Querschnitt auf und sind im eingebauten Zustand nach unten geöffnet, vgl. Fig. 5c. Die Unterlenker 5.3 sind quer zur Bewegungsrichtung B breiter ausgebildet als die Oberlenker 5.2. Die Form der Ober- und Unterlenker 5.2, 5.3 ist insbesondere an die erwarteten Lastfälle und auftretenden Kräfte angepasst. Auch der Arm 5.1 bzw. das entsprechende Koppelelement 10 weist im Vergleich zu den anderen Ausführungsbeispielen eine veränderte Grundform auf, welche ebenfalls auf die Anforderungen der Arbeitsmaschine 1 angepasst ist, vgl. Fig. 5b. Das Grundprinzip der Parallelogramm-Aufhängung 5 bleibt jedoch unabhängig von der Ausgestaltung der Arme 5.1 und Lenker 5.2, 5.3 erhalten.

Die Einstellung der Arbeitstiefe T der Schare 3 erfolgt bei der Ausführungsform gemäß Fig. 5a bis c über eine zentrale, mechanische Arbeitstiefeneinstellung 9, vgl. Fig. 5b. Der Aktor 9.2 ist wiederum als drehbare Steuerwelle ausgebildet. Der Aktor lässt sich über einen Handhebel manuell verstellen. Es lassen sich Drehstellungen von etwa ± 70 Grad einstellen.

Mit dem als Steuerwelle ausgebildeten Aktor 9.2 sind als Druckelemente ausgebildete Stellelemente 9.1 wirkverbunden, vgl. Fig. 5c. Die Stellelemente 9.1 sind als stabartige Stelllenker ausgeführt und einseitig über jeweils ein Exzenterelement 11 mit dem Aktor 9.2 wirkverbunden. Die Drehbewegungen des Aktors 9.2 werden über das Exzenterelement 11 in eine lineare Bewegung des Stellelements 9.1 überführt.

Die Stellelemente 9.1 erstrecken sich im Wesentlichen parallel zu den Lenkern 5.2, 5.3 und sind in vertikaler Richtung zwischen diesen angeordnet, vgl. Fig. 5a. An ihrem dem Aktor 9.2 abgewandten Ende sind die Stellelemente 9.1 mit einem Ansatz des Schwenkhebels 7 verbunden, vgl. Fig. 5a. Die linearen Bewegungen der Stellelemente 9.1 werden auch bei diesem Ausführungsbeispiel in wippenartige Bewegungen des Schwenkhebels 7 um den Drehpunkt 8 überführt. Über die mit dem Schwenkhebel 7 in dem ersten Ende 7.1 verbundene Tiefenführungsrolle 4 lässt sich somit die Arbeitstiefe T des jeweiligen Schars 3 einstellen.

Des Weiteren kann bei der Arbeitsmaschine 1 eine Lageerfassung der Parallelogramm-Aufhängung 5 vorgesehen sein. Eine solche Lageerfassung, welche geeignete Lagesensoren umfasst, kann insbesondere an den rahmenseitigen Gelenkpunkten 6.1, 6.2 vorgesehen sein. Über die Lageerfassung lässt sich die Ausrichtung der Parallelogramm-Aufhängung 5 ermitteln. Über die Ausrichtung der Parallelogramm-Aufhängung lasse sich auch Rückschlüsse auf die Ausrichtung der damit verbundenen Schareinheit 2 ziehen. Wenn überdies geeignete Aktoren vorgesehen sind, lassen sich einer oder beide Lenker 5.2, 5.3 der Parallelogramm-Aufhängung 5 zudem verschieben, was eine weitere Einstellmöglichkeit der Arbeitstiefe T eröffnet, welche jedoch in der Regel mit einer Veränderung des Anstellwinkels des betreffenden Schars 3 einhergeht.

Neben der Arbeitstiefeneinstellung 9 zur Einstellung der Arbeitstiefe T kann die Arbeitsmaschine 1 auch eine Schardruckeinstellung 12 aufweisen. Über die Schardruckeinstellung 12 kann ein zwischen dem jeweiligen Schar 3 und der Nutzfläche N wirkender Schardruck D eingestellt werden.

Die schematische Prinzipdarstellung gemäß Fig. 6a lässt in diesem Zusammenhang erkennen, dass die Schardruckeinstellung 12 an dem Unterlenker 5.3 der Parallelogramm-Aufhängung 5 angreift. Über eine Rotation des Unterlenkers 5.3 in dem Gelenkpunkt 6.2 kann der Schardruck D erhöht oder reduziert werden.

Wie dies auch den Darstellungen in Fig. 1a bis f entnommen werden kann, ist ein Steuerprofil oder -träger mit viereckigem Querschnitt als Aktor 12.1 vorgesehen, an welchem die Unterlenker 5.3 befestigt sind. Der Aktor 12.1 erstreckt sich im Wesentlichen parallel zu dem Aktor 9.2 quer zu der Bewegungsrichtung B der Arbeitsmaschine 1. Durch Rotation des Aktors 12.1 um dessen Längsachse lässt sich der Schardruck D erhöhen oder reduzieren. Die Steuerung des Schardrucks D kann mit der Steuerung der Arbeitsmaschine 1 und/oder der Zugmaschine verknüpft sein. Ferner kann eine Regelung zur Regelung des Schardrucks D vorgesehen sein.

Darüber hinaus ist bei der Arbeitsmaschine 1 auch eine Aufstandskrafterfassung 13 zur Erfassung der zwischen der Schareinheit 2 und der Nutzfläche N wirkenden Aufstandskraft F ausgebildet, vgl. insb. Fig. 6a. Die Erfassung der Aufstandskraft F kann in die Regelung oder Steuerung des Schardrucks D einbezogen sein. Die Erfassung der Aufstandskraft F erfolgt über geeignete Kraftsensoren 13.1, welche beispielsweise als Kraftaufnehmer ausgebildet sein können.

Die Darstellung in Fig. 6a verdeutlicht beispielhaft verschiedene Montagepositionen, an denen ein Kraftsensor 13.1 zur Erfassung der Aufstandskraft F angeordnet sein kann. Diese Montagepositionen umfassen eine Anordnung an der Tiefenführungsrolle 4, insbesondere im Bereich deren Nabe. Ferner kann ein Kraftsensor 13.1 an dem als wippenartig bewegbaren Schwenkhebel 7 angeordnet sein. Eine weitere geeignete Position für die Anordnung eines Kraftsensors 13.1 an dem Schwenkhebel 7 ist im Bereich der Verbindung mit dem Stellelement 9.1. Ferner kann ein Kraftsensor 13.1 auch an verschiedenen Stellen entlang des Stellelements 9.1 oder im Bereich des Aktors 9.2 vorgesehen sein. Über im Bereich des Stellelements 9.1 oder des Aktors 9.2 angeordnete Kraftsensoren 13.1 lässt sich die Betätigungskraft für die Einstellung der Arbeitstiefe T detektieren. Die Betätigungskraft ist proportional zu der Summe der Aufstandskräfte F auf die Schare 3, welche über das Stellelement 9.1 betätigt werden. Somit lässt sich eine mittlere Aufstandskraft F pro Schar 3 ermitteln.

Die vorstehend beschriebene landwirtschaftliche Arbeitsmaschine 1 zeichnet sich dadurch aus, dass eine präzise Einstellung der Arbeitstiefe T der Schare 3 ermöglicht wird, ohne dass damit eine unerwünschte Veränderung des Anstellwinkels der Schare 3 einhergeht.

### Bezugszeichen

- 1: Arbeitsmaschine
- 2: Schareinheit
- 2.1: Gelenkpunkt
- 2.2: Gelenkpunkt
- 3: Schar
- 4: Tiefenführungsrolle
- 5: Parallelogramm-Aufhängung
- 5.1: Arm
- 5.2: Lenker
- 5.3: Lenker
- 6: Maschinenrahmen
- 6.1: Gelenkpunkt
- 6.2: Gelenkpunkt
- 7: Schwenkhebel
- 7.1: Ende
- 7.2: Ende
- 8: Drehpunkt
- 9: Arbeitstiefeneinstellung
- 9.1: Stellelement
- 9.2: Aktor
- 10: Koppelelement
- 10.1: Scharanbindung
- 11: Exzenterelement
- 12: Schardruckeinstellung
- 12.1: Aktor
- 13: Aufstandskrafterfassung
- 13.1: Kraftsensor

- B: Bewegungsrichtung
- D: Schardruck
- F: Aufstandskraft
- N: Nutzfläche
- T: Arbeitstiefe
- U: Säfurche

## Patentansprüche

1. Landwirtschaftliche Arbeitsmaschine, mit mehreren parallel zueinander angeordneten, entlang einer landwirtschaftlichen Nutzfläche (N) bewegbaren Schareinheiten (2), die jeweils mindestens ein Schar (3) zum Eingriff in die Nutzfläche (N) und eine Tiefenführungsrolle (4) zur Einstellung der Arbeitstiefe (T) des Schars (3) aufweisen, wobei die Schareinheiten (2) zum Ausgleich von Bodenunebenheiten der Nutzfläche (N) über eine Parallelogramm-Aufhängung (5) mit einem Maschinenrahmen (6) verbunden sind,
**dadurch gekennzeichnet,**
**dass** die Tiefenführungsrolle (4) gegenüber der Parallelogramm-Aufhängung (5) bewegbar angeordnet ist.

2. Landwirtschaftliche Arbeitsmaschine nach Anspruch 1, **dadurch gekennzeichnet, dass** die Tiefenführungsrolle (4) gegenüber der Parallelogramm-Aufhängung (5) schwenkbar angeordnet ist, dass die Tiefenführungsrolle (4) an einem Schwenkhebel (7) angeordnet ist, welcher um einen an der Parallelogramm-Aufhängung (5) angeordneten Drehpunkt (8) drehbar gelagert ist.

3. Landwirtschaftliche Arbeitsmaschine nach Anspruch 2, **dadurch gekennzeichnet, dass** die Tiefenführungsrolle (4) über eine Arbeitstiefeneinstellung (9) bewegbar angeordnet ist, dass die Tiefenführungsrolle (4) an einem ersten Ende (7.1) des Schwenkhebels (7) angeordnet ist und dass dessen zweites Ende (7.2) mit der Arbeitstiefeneinstellung (9) gekoppelt ist.

4. Landwirtschaftliche Arbeitsmaschine nach einem der Ansprüche 2 oder 3, **dadurch gekennzeichnet, dass** der Drehpunkt (8) zwischen dem ersten Ende (7.1) und dem zweiten Ende (7.2) des Schwenkhebels (7) angeordnet ist, wobei der Schwenkhebel (7) wippenartig um den Drehpunkt (8) bewegbar ist.

5. Landwirtschaftliche Arbeitsmaschine nach einem der vorhergehenden Ansprüche, **dadurch gekennzeichnet, dass** die Parallelogramm-Aufhängung (5) zwei in jeweils einem rahmenseitigen Gelenkpunkt (6.1, 6.2) schwenkbar an dem Maschinenrahmen (6) angelenkte, parallel zueinander angeordnete Lenker (5.2, 5.3) und einen sich scharseitig zwischen den Lenkern (5.2, 5.3) erstreckenden, in zwei scharseitigen Gelenkpunkten (2.1, 2.2) mit diesen verbundenen Arm (5.1) aufweist.

6. Landwirtschaftliche Arbeitsmaschine nach Anspruch 5, **dadurch gekennzeichnet, dass** der Arm (5.1) mit einem Koppelelement (10) verbunden ist, welches zum Ausgleich von Bodenunebenheiten der Nutzfläche (N) über die Parallelogramm-Aufhängung (5) in vertikaler Richtung gegenüber dem Maschinenrahmen (6) parallelgeführt ist.

7. Landwirtschaftliche Arbeitsmaschine nach Anspruch 5 und 6, **dadurch gekennzeichnet, dass** das Koppelelement (10) eine Scharanbindung (10.1) zur Anbindung des Schars (3) und den Drehpunkt (8) zur Lagerung des Schwenkhebels (7) aufweist.

8. Landwirtschaftliche Arbeitsmaschine nach einem der vorhergehenden Ansprüche, **dadurch gekennzeichnet, dass** die Arbeitstiefeneinstellung (9) ein Stellelement (9.1) zum Aufbringen eines Stellweges auf die Tiefenführungsrolle (4) aufweist.

9. Landwirtschaftliche Arbeitsmaschine nach einem der vorstehenden Ansprüche, **dadurch gekennzeichnet, dass** das Stellelement (9.1) mit dem zweiten Ende (7.2) des Schwenkhebels (7) gekoppelt ist.

10. Landwirtschaftliche Arbeitsmaschine nach einem der vorstehenden Ansprüche, **dadurch gekennzeichnet, dass** das Stellelement (9.1) als Zugelement, insbesondere als Kette oder Seil, ausgebildet ist.

11. Landwirtschaftliche Arbeitsmaschine nach einem der vorstehenden Ansprüche, **dadurch gekennzeichnet, dass** mehrere Stellelemente (9.1) zur gleichmäßigen Einstellung der Arbeitstiefe (T) mehrerer Schare (3) über einen gemeinsamen Aktor (9.2) betätigbar sind.

12. Landwirtschaftliche Arbeitsmaschine nach einem der vorhergehenden Ansprüche, **gekennzeichnet durch** eine Aufstandskrafterfassung (13) zur Erfassung der zwischen der Schareinheit (2) und der Nutzfläche (N) wirkenden Aufstandskraft (F).

13. Landwirtschaftliche Arbeitsmaschine nach Anspruch 12, **dadurch gekennzeichnet, dass** jede Schareinheit (2) eine eigene Aufstandskrafterfassung (13) zur Erfassung zur Erfassung der zwischen der Schareinheit (2) und der Nutzfläche (N) wirkenden Aufstandskraft (F) aufweist.

14. Landwirtschaftliche Arbeitsmaschine nach Anspruch 12 oder 13, **dadurch gekennzeichnet, dass** die Aufstandskrafterfassung (13) einen Kraftsensor (13.1) umfasst, welcher an der Tiefenführungsrolle (4), dem Stellelement (9.1) und/oder dem Schwenkhebel (7) angeordnet ist.

15. Landwirtschaftliche Arbeitsmaschine nach einem der 12 bis 14, **dadurch gekennzeichnet, dass** die Aufstandskrafterfassung (13) mit dem Stellelement (9.1) wirkverbunden ist.
